# EUROPÄISCHE PATENTSCHRIFT

(11) **EP 3 280 883 B1**
(45) Veröffentlichungstag und Bekanntmachung des Hinweises auf die Patenterteilung: **20.02.2019**
(21) Anmeldenummer: 16714372.6
(22) Anmeldetag: 31.03.2016
(51) Int. Cl.: F22D 11/00, F01K 7/06, F01K 25/00, F22B 37/48, F22B 37/50, F22B 37/26, F01K 7/16

(54) **VERFAHREN ZUM AUFBEREITEN EINES FLÜSSIGEN MEDIUMS UND AUFBEREITUNGSANLAGE**
METHOD FOR PROCESSING A LIQUID MEDIUM AND PROCESSING SYSTEM
PROCÉDÉ SERVANT À PRÉPARER UN MILIEU FLUIDE ET INSTALLATION DE PRÉPARATION

(30) Priorität: 10.04.2015 DE 102015206484
(43) Veröffentlichungstag der Anmeldung: 14.02.2018
(73) Patentinhaber: Siemens Aktiengesellschaft, 80333 München (DE)
(72) Erfinder: ROMAN HERNANDEZ, Raul, 63075 Offenbach am Main (DE); BALDAUF, Manfred, 91056 Erlangen (DE); ZIEGMANN, Markus, 91083 Baiersdorf (DE)
(86) Internationale Anmeldenummer: PCT/EP2016/057095
(87) Internationale Veröffentlichungsnummer: WO 2016/162264

(56) Entgegenhaltungen:
- EP-A1- 2 835 508
- CN-U- 202 955 680
- CN-U- 204 200 521
- US-A1- 2011 265 444

## Beschreibung

Die Erfindung betrifft ein Verfahren zum Aufbereiten eines flüssigen Mediums, bei dem das aufzubereitende Medium durch einen Flüssigkeitskreislauf geführt wird und das aufzubereitende Medium im Flüssigkeitskreislauf mithilfe eines Wärmeübertragers aufgeheizt wird. Außerdem betrifft die Erfindung eine Aufbereitungsanlage zum Aufbereiten eines flüssigen Mediums, welche einen Flüssigkeitskreislauf mit einem Wärmeübertrager zum Aufheizen des aufzubereitenden Mediums umfasst.

In zahlreichen technischen Bereichen muss ein flüssiges Medium vor seiner ersten Verwendung und/oder seiner Wiederverwendung als Prozessflüssigkeit einer Aufbereitung unterzogen werden. Dabei können z.B. Stoffe aus dem Medium entfernt und/oder andere Stoffe in das Medium eingebracht werden, um gezielt gewisse Parameter des flüssigen Mediums zu verändern. Beispielsweise muss Prozesswasser, in welchem sich Verunreinigungen angesammelt bzw. aufkonzentriert haben, gereinigt werden, damit das Prozesswasser wiederverwendet oder umweltgerecht entsorgt werden kann.

Bisher bekannte Verfahren zur Aufbereitung eines flüssigen Mediums, insbesondere zur Entfernung von Stoffen aus dem flüssigen Medium, basieren üblicherweise auf einer Wärmebehandlung, bei welcher dem Medium über einen Wärmeübertrager thermische Energie zugeführt wird. Solch eine Wärmebehandlung ist in der Regel mit einem hohen Energieaufwand und folglich auch mit hohen (Energie-)Kosten verbunden. Bekannt ist ein solches Verfahren beispielsweise aus der US 2011/0265444 A1.

Eine Aufgabe der Erfindung ist, ein Verfahren anzugeben, mit welchem ein flüssiges Medium kostengünstig aufbereitet werden kann.

Diese Aufgabe wird durch ein Verfahren der eingangs genannten Art gelöst, bei dem erfindungsgemäß in einer Trenneinrichtung eine Flüssigkeit-Dampf-Trennung durchgeführt wird, und eine bei der Flüssigkeit-Dampf-Trennung gewonnene Flüssigkeit als Heizmittel in den Wärmeübertrager eingeleitet wird.

Die Erfindung geht von der Überlegung aus, dass die Flüssigkeit, die bei der Flüssigkeit-Dampf-Trennung gewonnen wird, einen hohen Wärmegehalt aufweisen kann, insbesondere wenn sie aus einem Fluid gewonnen wird, welches als Wärmeträger eingesetzt wird und dementsprechend einen hohen Wärmegehalt aufweist.

Indem die bei der Flüssigkeit-Dampf-Trennung gewonnene Flüssigkeit in den Wärmeübertrager eingeleitet wird, kann thermische Energie, welche in der Flüssigkeit enthalten ist, zum Aufheizen des aufzubereitenden Mediums genutzt werden. Auf diese Weise kann das aufzubereitende Medium energieeffizient aufgeheizt werden. Dies wiederum ermöglicht eine Reduktion der Energiekosten beim Aufbereiten des Mediums. Ferner kann vermieden werden, dass die thermische Energie der Flüssigkeit ungenutzt aus einem System, in welchem das Medium eingesetzt wird, abgeführt wird bzw. ungenutzt an die Umwelt abgegeben wird.

Vorzugsweise wird das Verfahren bei einer Dampfturbinenanlage eingesetzt. Grundsätzlich ist das Verfahren auch bei einer anderen Anlage bzw. einem anderen Systemen einsetzbar.

Das aufzubereitende Medium kann z.B. Wasser sein bzw. Wasser als Hauptbestandteil aufweisen. Zudem kann das aufzubereitende Medium organische und/oder anorganische Verunreinigungen enthalten. Die Verunreinigungen können im aufzubereitenden Medium insbesondere in gelöster und/oder suspendierter Form vorliegen.

Das Aufbereiten des Mediums kann unter anderem eine Entfernung der Verunreinigungen aus dem Medium umfassen. Außerdem kann das Aufbereiten des Mediums eine Erzeugung einer demineralisierten Flüssigkeit aus dem aufzubereitenden Medium umfassen.

Sinnvollerweise wird das aufzubereitende Medium durch den Wärmeübertrager geführt. Der Wärmeübertrager ist zweckmäßigerweise als Flüssigkeit-Flüssigkeit-Wärmeübertrager ausgestaltet. Das heißt, zweckmäßigerweise ist sowohl ein wärmeaufnehmendes Medium, welches durch den Wärmeübertrager geführt wird, als auch ein wärmeabgebendes Medium, welches durch den Wärmeübertrager geführt wird, jeweils eine Flüssigkeit. Das aufzubereitende Medium kann Wärme von der Flüssigkeit, die bei der Flüssigkeit-Dampf-Trennung gewonnenen wird, aufnehmen. Umgekehrt kann Letztere Wärme an das aufzubereitende Medium abgeben.

In bevorzugter Weise wird eine verunreinigte Flüssigkeit, insbesondere Abschlämmwasser, aus einer Dampftrommel in die Trenneinrichtung eingeleitet. Dadurch ist es möglich, thermische Energie, die in der verunreinigten Flüssigkeit enthalten ist, zum Aufheizen des aufzubereitenden Mediums zu nutzen. Auf diese Weise kann vermieden werden, dass die verunreinigte Flüssigkeit bzw. die in der verunreinigten Flüssigkeit enthaltene (Rest-)Wärme ungenutzt aus einem System, beispielsweise aus einem Dampfturbinenkreislauf, abgeleitet wird.

Zweckmäßigerweise wird bei der Flüssigkeit-Dampf-Trennung Dampf von der verunreinigten Flüssigkeit abgetrennt, z.B. durch eine Entspannung der verunreinigten Flüssigkeit in der Trenneinrichtung. Vorzugsweise wird der abgetrennte Dampf aus der Trenneinrichtung in ein Element eines Dampferzeugers (auch Dampfkessel genannt) eingeleitet. Sinnvollerweise ist der Dampferzeuger ein Bestandteil der zuvor erwähnten Dampfturbinenanlage.

In der Dampftrommel kann erster Druck herrschen. Wohingegen in dem Element des Dampferzeugers, in welches der Dampf eingeleitet wird, ein zweiter Druck herrschen kann. Vorzugsweise ist der zweite Druck niedriger als der erste Druck. Dies ermöglicht es dem Dampf aus der Trenneinrichtung in besagtes Element des Dampferzeugers zu strömen.

Zweckmäßigerweise wird die bei der Flüssigkeit-Dampf-Trennung gewonnene Flüssigkeit aus der verunreinigten Flüssigkeit gewonnen. Des Weiteren kann die bei der Flüssigkeit-Dampf-Trennung gewonnene Flüssigkeit eine vom Dampf abgetrennte bzw. bei der Flüssigkeit-Dampf-Trennung zurückbleibende Flüssigkeit sein.

Ferner ist es zweckmäßig, wenn die verunreinigte Flüssigkeit diskontinuierlich - insbesondere nur dann, wenn eine Abschlämmung einer oder mehrerer Dampftrommeln durchgeführt wird - in die Trenneinrichtung eingeleitet wird. Entsprechend wird die Flüssigkeit-Dampf-Trennung zweckmäßigerweise diskontinuierlich durchgeführt.

Vorzugsweise ist das Element des Dampferzeugers, in welches der abgetrennte Dampf aus der Trenneinrichtung eingeleitet wird, eine weitere Dampftrommel. Alternativ kann das Element des Dampferzeugers, in welches der abgetrennte Dampf aus der Trenneinrichtung eingeleitet wird, ein der weiteren Dampftrommel nachgeschaltetes Element des Dampferzeugers, wie z.B. eine Verbindungsleitung von der weiteren Dampftrommel zu einem Überhitzer, sein.

Der Dampf kann aus der weiteren Dampftrommel bzw. aus dem der weiteren Dampftrommel nachgeschalteten Element unter anderem zu einer Dampfturbine der Dampfturbinenanlage geführt werden, z.B. um einen Dampfmassenstrom in der Dampfturbine und somit auch eine Leistung der Dampfturbinenanlage zu erhöhen.

Die beiden zuvor erwähnten Dampftrommeln sind sinnvollerweise Bestandteile des Dampferzeugers.

Grundsätzlich kann die verunreinigte Flüssigkeit aus einem beliebigen ersten Element des Dampferzeugers in die Trenneinrichtung eingeleitet werden. Zudem kann der bei der Flüssigkeit-Dampf-Trennung abgetrennte Dampf in ein beliebiges zweites Element des Dampferzeugers geleitet werden, in welchem ein niedrigerer Druck herrscht als in dem ersten Element.

Bevorzugterweise wird die bei der Flüssigkeit-Dampf-Trennung gewonnene Flüssigkeit durch den Wärmeübertrager geführt. In einer vorteilhaften Weiterbildung des Verfahrens wird die bei der Flüssigkeit-Dampf-Trennung gewonnene Flüssigkeit aus dem Wärmeübertrager in den Flüssigkeitskreislauf, insbesondere in einen Pufferspeicher, eingeleitet. Weiter kann die bei der Flüssigkeit-Dampf-Trennung gewonnene Flüssigkeit zumindest einen Teil des aufzubereitenden Mediums ausbilden.

Gemäß einer vorteilhaften Ausführung des Verfahrens wird ein Trägermedium, insbesondere ein gasförmiges Trägermedium, wie z.B. Luft, in einem Kühlkreislauf durch einen Verdunster und einen Kondensator geführt.

Der Kondensator ist vorteilhafterweise als Flüssigkeit-Gas-Wärmeübertrager ausgestaltet. Das heißt, ein erstes Medium, das den Kondensator durchströmt, ist sinnvollerweise eine Flüssigkeit und zweites Medium, das den Kondensator durchströmt, ist sinnvollerweise ein Gas bzw. ein Gasgemisch.

Ferner können der Verdunster und der Kondensator jeweils sowohl als Element des Flüssigkeitskreislaufs als auch als Element des Kühlkreislaufs aufgefasst werden. Sinnvollerweise wird das aufzubereitende Medium im Flüssigkeitskreislauf durch den Kondensator und den Verdunster geführt.

Zweckmäßigerweise wird das aufzubereitende Medium im Verdunster verteilt, insbesondere versprüht. Das aufzubereitende Medium kann beispielsweise mittels einer Sprühvorrichtung im Verdunster verteilt, insbesondere versprüht, werden. Vorzugsweise verdunstet zumindest ein Teil des verteilten aufzubereitenden Mediums und wird vom (gasförmigen) Trägermedium aufgenommen. Ferner kann das Trägermedium Tropfen, die beim Verteilen bzw. Versprühen des aufzubereitenden Mediums entstehen, mit sich führen. Weiter ist es bevorzugt, wenn zumindest ein Teil des verdunsteten, vom Trägermedium aufgenommenen aufzubereitenden Mediums im Kondensator kondensiert.

Vorteilhafterweise nimmt das Trägermedium im Verdunster Wärme vom verteilten, aufzubereitenden Medium auf. Dadurch kann ein Sättigungsdampfdruck des aufzubereitenden Mediums im Trägermedium erhöht werden, sodass das Trägermedium mehr Dampf aufnehmen kann. Durch die Wärmeabgabe an das Trägermedium wird das aufzubereitende Medium vorteilhafterweise abgekühlt.

Des Weiteren ist es zweckmäßig, wenn in einem Kondensator, insbesondere dem zuvor genannten Kondensator, ein Kondensat gewonnen wird. Sinnvollerweise entsteht das Kondensat, das im Kondensator gewonnen wird, bei der zuvor erwähnten Kondensation, bei welcher das vom Trägermedium aufgenommene aufzubereitende Medium im Kondensator kondensiert.

Durch den zuvor beschriebenen Verdunstungs-Kondensations-Prozess kann erreicht werden, dass das Kondensat, gegenüber dem ursprünglich in den Flüssigkeitskreislauf eingeleiteten, aufzubereitenden Medium eine geringere Konzentration an Verunreinigungen aufweist. Außerdem zeichnet sich der zuvor beschriebene Verdunstungs-Kondensations-Prozess, verglichen mit anderen Aufbereitungsmethoden, durch einen geringen Bedarf an Chemikalien zum Aufbereiten des flüssigen Mediums aus.

Es kann vorgesehen sein, dass das Kondensat entgast wird. Zweckmäßigerweise werden hierbei gelöste Gase, die im Kondensat enthalten sind, aus dem Kondensat entfernt. Auf diese Weise kann z.B. eine Prozessflüssigkeit für einen Dampfturbinenkreislauf gewonnen werden. Das Kondensat kann insbesondere mithilfe einer Entgasungseinrichtung, wie z.B. einem Membran-Entgaser, entgast werden.

Weiter kann vorgesehen sein, dass das entgaste Kondensat in den Dampfturbinenkreislauf eingeleitet und/oder deionisiert wird, insbesondere mithilfe eines Elektrodeionisationsmoduls. Zweckmäßigerweise werden bei der Deionisierung des Kondensats Ionen und/oder ionisierbare Stoffe, die im Kondensat enthalten sind, aus dem Kondensat entfernt. Hierdurch kann z.B. eine demineralisierte Flüssigkeit gewonnen werden.

In bevorzugter Weise wird das aufzubereitende Medium im Flüssigkeitskreislauf mithilfe eines weiteren Wärmeübertragers aufgeheizt. Hierdurch kann eine zusätzliche Aufheizung des aufzubereitenden Mediums erreicht werden. Folglich ist es möglich, einen Massenstrom durch den erstgenannten Wärmeübertrager zu verringern, ohne dadurch eine geringere Wärmezufuhr in den Flüssigkeitskreislauf in Kauf nehmen zu müssen.

Der weitere Wärmeübertragers kann insbesondere ein Flüssigkeit-Flüssigkeit-Wärmeübertrager sein. Ferner ist der weitere Wärmeübertragers sinnvollerweise im Flüssigkeitskreislauf angeordnet. Vorzugsweise wird zumindest ein Teil einer Prozessflüssigkeit, welche einen Kondensatvorwärmer durchströmt, aus dem Kondensatvorwärmer als Heizmittel in den weiteren Wärmeübertrager geleitet. Vorzugsweise ist der Kondensatvorwärmer ein Bestandteil der zuvor erwähnten Dampfturbinenanlage.

Vorteilhafterweise nimmt das aufzubereitende Medium Wärme von der Prozessflüssigkeit auf. Weiter ist es vorteilhaft, wenn die Prozessflüssigkeit vom weiteren Wärmeübertrager zurück in den Kondensatvorwärmer geführt wird.

Zweckmäßigerweise wird derjenige Teil des aufzubereitenden Mediums, welcher in flüssiger Form aus einem Verdunster austritt, insbesondere aus dem zuvor erwähnten Verdunster austritt, gekühlt. Hierzu wird vorzugweise ein zusätzlicher Wärmeübertrager eingesetzt. Auf diese Weise wird die zuvor angesprochene Kondensation im Kondensator erleichtert. Zweckmäßigerweise ist dieser zusätzliche Wärmeübertrager ein Flüssigkeit-Flüssigkeit-Wärmeübertrager. Ferner ist es vorteilhaft, wenn derjenige Teil des aufzubereitenden Mediums, welcher aus dem Verdunster austritt, in einen Pufferspeicher, insbesondere in den zuvor erwähnten Pufferspeicher, eingeleitet wird.

Des Weiteren kann vorgesehen sein, dass eine Säure in den Flüssigkeitskreislauf, insbesondere in den Verdunster, eingeleitet wird. Dadurch kann z.B. eine Bildung von Carbonaten im aufzubereitenden Medium verhindert bzw. reduziert werden.

Ferner kann in einer weiteren Trenneinrichtung eine Flüssigkeit-Dampf-Trennung durchgeführt werden. Vorzugsweise herrscht in der weiteren Trenneinrichtung ein niedrigerer Druck als in der erstgenannten Trenneinrichtung. Der Druck in der weiteren Trenneinrichtung kann z.B. Atmosphärendruck oder annähernd Atmosphärendruck sein. Zudem kann vorgesehen sein, dass Dampf und/oder eine Flüssigkeit aus der erstgenannten Trenneinrichtung in die weitere Trenneinrichtung eingeleitet wird. Außerdem ist es zweckmäßig, wenn eine Flüssigkeit, die bei der Flüssigkeit-Dampf-Trennung in der weiteren Trenneinrichtung gewonnen wird, in den Flüssigkeitskreislauf, insbesondere in den Pufferspeicher, eingeleitet wird. Die letztgenannte Flüssigkeit kann einen Teil des aufzubereitenden Mediums ausbilden. Auf diese Weise kann vermieden werden, dass die letztgenannte Flüssigkeit ungenutzt entsorgt wird.

In bevorzugter Weise wird eine Restflüssigkeit aus dem Flüssigkeitskreislauf abgeleitet, insbesondere in einen Kühlturm oder in eine (externe) Entsorgungseinrichtung. Als Restflüssigkeit kann vorliegend derjenige Teil des aufzubereitenden Mediums aufgefasst werden, der im Laufe des Aufbereitungsprozesses nicht im Kondensator kondensiert bzw. nach dem Aufbereiten im Flüssigkeitskreislauf zurückbleibt. Die Restflüssigkeit weist sinnvollerweise eine höhere Konzentration an Verunreinigungen auf als das ursprünglich in den Flüssigkeitskreislauf eingeleitete, aufzubereitende Medium.

Ferner ist es eine Aufgabe der Erfindung, eine Aufbereitungsanlage zum Aufbereiten eines flüssigen Mediums bereitzustellen, mittels welchem das Medium kostengünstig aufbereitet werden kann.

Diese Aufgabe wird durch eine Aufbereitungsanlage der eingangs genannten Art gelöst, welche erfindungsgemäß eine mit dem Wärmeübertrager verbundene Trenneinrichtung aufweist, in welcher eine Flüssigkeit-Dampf-Trennung durchführbar ist, wobei eine bei der Flüssigkeit-Dampf-Trennung gewonnene Flüssigkeit als Heizmittel in den Wärmeübertrager einleitbar ist.

Zweckmäßigerweise ist der Flüssigkeitskreislauf dazu eingerichtet, das aufzubereitende Medium zu führen. Weiter ist es vorteilhaft, wenn der Wärmeübertrager eingangsseitig mit der Trenneinrichtung verbunden ist. Die Trenneinrichtung kann z.B. als Abscheidebehälter ausgestaltet sein.

Sinnvollerweise umfasst der Flüssigkeitskreislauf eine Förderpumpe, die dazu eingerichtet ist, das aufzubereitende Medium im Flüssigkeitskreislauf zu fördern. Außerdem kann die Aufbereitungsanlage einen Behälter zum Speichern des aufbereiteten Mediums aufweisen.

Ferner ist es vorteilhaft, wenn die Aufbereitungsanlage einen Kühlkreislauf umfasst. Der Kühlkreislauf kann unter anderem einen Kondensator aufweisen. Außerdem kann der Kühlkreislauf einen Verdunster aufweisen.

Außerdem können der Verdunster und der Kondensator jeweils als Element des Flüssigkeitskreislaufs aufgefasst werden. Sinnvollerweise sind der Verdunster und der Kondensator vom aufzubereitenden Medium durchströmbar.

Der Verdunster umfasst zweckmäßigerweise einen Behälter. Weiter kann der Verdunster eine Sprühvorrichtung zum Verteilen, insbesondere zum Versprühen, des aufzubereitenden Mediums aufweisen. Sinnvollerweise ist die Sprühvorrichtung im Behälter angeordnet. Zudem ist es vorteilhaft, wenn der Verdunster eine Trägermediumeinlassvorrichtung zum Einlassen eines Trägermediums, insbesondere eines gasförmigen Trägermediums, in den Behälter aufweist.

Des Weiteren kann an den Kondensator eine Auslassleitung angeschlossen, welche dazu vorgesehen ist, ein Kondensat aus dem Kondensator abzuleiten.

Der Verdunster kann als Gegenstromverdunster ausgestaltet sein. Zudem kann der Kondensator als Gegenstromkondensator ausgestaltet sein. Das heißt, ein wärmeaufnehmendes Medium und ein wärmeabgebendes Medium strömen im Verdunster bzw. Kondensator vorzugsweise in einander entgegengesetzte Richtungen.

Darüber hinaus kann der Kühlkreislauf einen Ventilator aufweisen. Zweckmäßigerweise ist der Ventilator dazu eingerichtet, ein gasförmiges Trägermedium vom Kondensator zum Verdunster und vom Verdunster wieder zurück zum Kondensator zu fördern.

In einer bevorzugten Ausgestaltung der Aufbereitungsanlage umfasst der Flüssigkeitskreislauf einen Pufferspeicher. Zweckmäßigerweise ist der erstgenannte Wärmeübertrager ausgangsseitig mit dem Pufferspeicher verbunden. Ferner kann der Pufferspeicher mit einem Behälter verbunden sein, der eine zu demineralisierende Flüssigkeit, beispielweise Trinkwasser, enthält.

Sinnvollerweise umfasst der Flüssigkeitskreislauf eine Abführleitung zum Ableiten einer Restflüssigkeit aus dem Flüssigkeitskreislauf. Der Flüssigkeitskreislauf kann außerdem ein Wegeventil, insbesondere ein 3-Wegeventil, aufweisen. Das Wegeventil kann z.B. zwischen dem Verdunster und dem Pufferspeicher angeordnet sein. Vorzugsweise ist die Abführleitung mit dem Wegeventil verbunden.

In einer vorteilhaften Weiterbildung der Erfindung umfasst der Flüssigkeitskreislauf einen zusätzlichen Wärmeübertrager. Zweckmäßigerweise ist der zusätzliche Wärmeübertrager dazu eingerichtet, eine Flüssigkeit, insbesondere eine aus dem Verdunster austretende Flüssigkeit, abzukühlen. Die aus dem Verdunster austretende Flüssigkeit kann insbesondere derjenige Teil des aufzubereitenden Mediums sein, welcher nicht zuvor im Kondensator kondensiert ist.

Der zusätzliche Wärmeübertrager kann beispielsweise ein Bestandteil eines geschlossenen Kühlsystems sein. Alternativ kann der zusätzliche Wärmeübertrager ein Bestandteil eines Durchlaufkühlsystems sein. Im letztgenannten Fall kann der zusätzliche Wärmeübertrager mit dem Pufferspeicher verbunden sein.

Des Weiteren ist es zweckmäßig, wenn die Aufbereitungsanlage mit einer Entgasungseinrichtung, insbesondere mit einem Membran-Entgaser, ausgestattet ist. Sinnvollerweise ist die Entgasungseinrichtung mit dem Kondensator verbunden.

Außerdem ist es bevorzugt, wenn die Aufbereitungsanlage ein Elektrodeionisationsmodul, auch EDI-Modul genannt, aufweist. Das Elektrodeionisationsmodul kann insbesondere ein sogenanntes kontinuierliches Elektrodeionisationsmodul (CEDI-Modul) sein. Zweckmäßigerweise ist das Elektrodeionisationsmodul mit der Entgasungseinrichtung verbunden. Weiter ist es sinnvoll, wenn das Elektrodeionisationsmodul der Entgasungseinrichtung nachgeschaltet ist.

Zwischen der Entgasungseinrichtung und dem Elektrodeionisationsmodul kann ein Wegeventil, insbesondere ein 3-Wegeventil, angeordnet sein. Über das Wegeventil kann eine aus der Entgasungseinrichtung austretende (entgaste) Flüssigkeit zum Elektrodeionisationsmodul geleitet werden und/oder in ein anderes Element bzw. ein anderes System, wie z.B. in einen Dampfturbinenkreislauf, eingeleitet werden.

Weiterhin kann die Aufbereitungsanlage ein Bestandteil einer Dampfturbinenanlage sein. Sinnvollerweise umfasst die Dampfturbinenanlage eine Dampfturbine, vorzugsweise eine Dampfturbine mit mehreren Druckstufen. Außerdem ist es zweckmäßig, wenn die Dampfturbinenanlage einen Dampferzeuger umfasst. Der Dampferzeuger wiederum kann eine erste Dampftrommel aufweisen, in der ein erster Druck herrscht. Ferner kann der Dampferzeuger eine zweite Dampftrommel aufweisen, in der ein zweiter, niedrigerer Druck herrscht. Vorzugsweise ist die Trenneinrichtung mit der ersten Dampftrommel verbunden. Weiter ist es bevorzugt, wenn die Trenneinrichtung mit der zweiten Dampftrommel verbunden ist. Die Trenneinrichtung kann insbesondere dampfseitig mit der ersten und/oder mit der zweiten Dampftrommel verbunden sein.

Neben den oben genannten beiden Dampftrommeln, kann der Dampferzeuger eine oder mehrere weitere Dampftrommeln aufweisen. Die Trenneinrichtung kann ferner mit einem oder mehreren anderen Elementen des Dampferzeugers, wie z.B. mit einer Verbindungsleitung von einer Dampftrommel zu einem Überhitzer des Dampferzeugers, verbunden sein.

Weiter ist es zweckmäßig, wenn die Dampfturbinenanlage, einen Kondensatvorwärmer umfasst. Außerdem kann der Flüssigkeitskreislauf einen weiteren Wärmeübertrager zum Aufheizen der aufzubereitenden Flüssigkeit umfassen. In einer bevorzugten Ausgestaltung der Erfindung ist der weitere Wärmeübertrager mit einem Kondensatvorwärmer, insbesondere dem zuvor genannten Kondensatvorwärmer der Dampfturbinenanlage, verbunden. Dadurch ist es möglich, zum Aufheizen des aufzubereitenden Mediums thermische Energie aus dem Kondensatvorwärmer auszukoppeln. Der weitere Wärmeübertrager ist vorzugsweise eingangsseitig mit einem Ausgang des Kondensatvorwärmers verbunden. Ausgangsseitig ist der weitere Wärmeübertrager vorzugsweise mit einem Eingang des Kondensatvorwärmers oder mit einem Element des Dampfturbinenkreislaufs, welches dem Kondensatvorwärmer vorgeschaltet ist, verbunden.

Vorteilhafterweise umfasst die Aufbereitungsanlage eine weitere Trenneinrichtung, in welcher eine Flüssigkeit-Dampf-Trennung durchführbar ist. Die weitere Trenneinrichtung kann beispielsweise als Abscheidebehälter ausgestaltet sein. Bevorzugterweise herrscht in der weiteren Trenneinrichtung niedrigerer Druck als in der erstgenannten Trenneinrichtung. In der weiteren Trenneinrichtung kann z.B. Atmosphärendruck oder annähernd Atmosphärendruck herrschen. Weiter ist es zweckmäßig, wenn die weitere Trenneinrichtung mit der erstgenannten Trenneinrichtung verbunden ist. Außerdem kann die weitere Trenneinrichtung mit dem Pufferspeicher verbunden sein.

Zweckmäßigerweise kommt das weiter oben beschriebene Verfahren bei der Aufbereitungsanlage bzw. bei der Dampfturbinenanlage zum Einsatz. Umgekehrt können gegenständliche Elemente, die beim Verfahren eingesetzt werden, Bestandteile der Aufbereitungsanlage bzw. der Dampfturbinenanlage sein.

Die Aufbereitungsanlage kann unter anderem zur Gewinnung bzw. zur Rückgewinnung einer Prozessflüssigkeit für einen Dampfturbinenkreislauf verwendet werden. Bei dieser Verwendung kann die Aufbereitungsanlage beispielsweise gemäß dem oben beschriebenen Verfahren betrieben werden.

Die (rück-)gewonnene Prozessflüssigkeit kann z.B. Wasser sein. Zweckmäßigerweise wird die Prozessflüssigkeit in den Dampfturbinenkreislauf eingeleitet. Weiter ist es zweckmäßig, wenn die Prozessflüssigkeit im Dampferzeuger verdampft wird. Der dabei erzeugte Dampf kann dazu verwendet werden, die Dampfturbine anzutreiben.

Sinnvollerweise wird die Prozessflüssigkeit aus dem aufzubereitenden Medium gewonnen. Das aufzubereitende Medium wiederum kann bei dieser Verwendung eine verunreinigte Prozessflüssigkeit aus dem Dampfturbinenkreislauf sein.

Durch besagte (Rück-)Gewinnung der Prozessflüssigkeit kann ein Prozessflüssigkeitsverbrauch während eines Betriebs der Dampfturbinenanlage reduziert werden.

Außerdem kann die Aufbereitungsanlage zur Gewinnung einer demineralisierten Flüssigkeit, insbesondere zur Gewinnung von demineralisiertem Wasser, verwendet werden.

Bei der letztgenannten Verwendung der Aufbereitungsanlage wird eine zu demineralisierende Flüssigkeit, z.B. Trinkwasser, zweckmäßigerweise in den Flüssigkeitskreislauf, insbesondere in den Pufferspeicher, eingeleitet. In bevorzugter Weise durchläuft die zu demineralisierende Flüssigkeit den Flüssigkeitskreislauf. Bei dieser Verwendung der Aufbereitungsanlage ist es möglich, dass der erstgenannte Wärmeübertrager der Aufbereitungsanlage als Strömungsführungselement ohne Heizwirkung bzw. ohne Wärmeübertragung von einem Heizmittel betrieben wird. Bevorzugterweise wird die zu demineralisierende Flüssigkeit mithilfe des weiteren Wärmeübertragers der Aufbereitungsanlage aufgeheizt.

Des Weiteren ist es zweckmäßig, wenn die zu demineralisierende Flüssigkeit im Verdunster verdunstet und anschließend im Kondensator kondensiert. Die kondensierte, zu demineralisierende Flüssigkeit kann mithilfe der Entgasungseinrichtung entgast und mithilfe des Elektrodeionisationsmoduls deionisiert werden. Auf diese Weise kann die demineralisierte Flüssigkeit energieeffizient gewonnen werden.

Die demineralisierte Flüssigkeit kann z.B. als Zusatzflüssigkeit (Zusatzwasser) in Dampfturbinenkreislauf eingeleitet werden, insbesondere um einer Aufkonzentrierung von Verunreinigungen in der Prozessflüssigkeit bzw. im Dampf entgegenzuwirken.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Aufbereitungsanlage kombinierbar. So sind Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Dampfturbinenanlage mit einer Aufbereitungsanlage zum Aufbereiten eines flüssigen Mediums; und
- FIG 2: eine weitere Dampfturbinenanlage mit einer Aufbereitungsanlage zum Aufbereiten eines flüssigen Mediums.

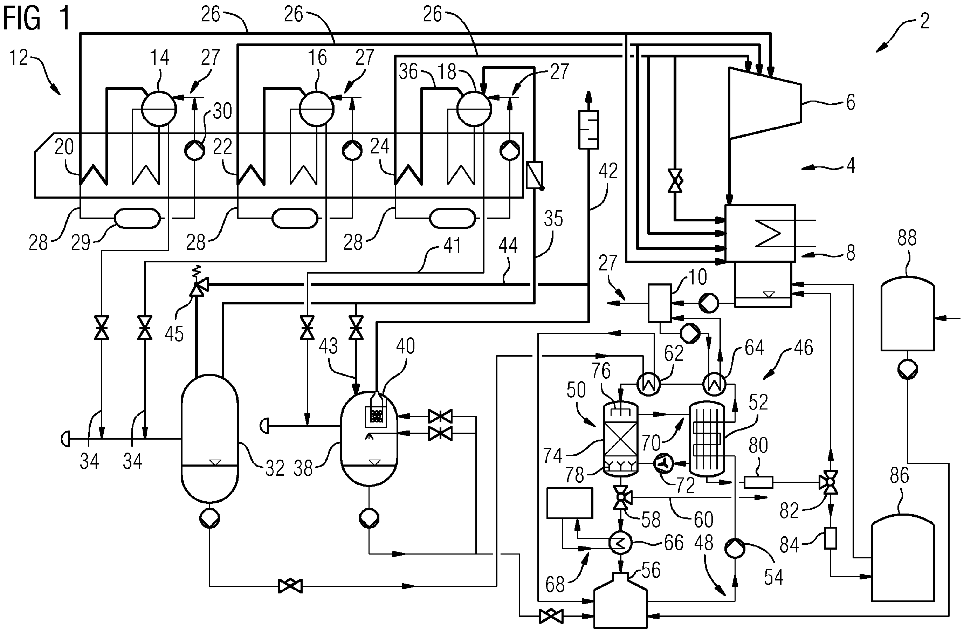

FIG 1 zeigt eine schematische, vereinfachte Darstellung einer Dampfturbinenanlage 2. Die Dampfturbinenanlage 2 weist einen Dampfturbinenkreislauf 4 auf. Der Dampfturbinenkreislauf 4 wiederum umfasst unter anderem eine dreistufige Dampfturbine 6, eine Kondensatoreinheit 8 sowie einen Dampferzeuger 10.

Der Dampferzeuger 10 umfasst einen Kondensatvorwärmer 12, wobei der Kondensatvorwärmer 12 einer besseren Darstellbarkeit halber von den übrigen Elementen des Dampferzeugers 10 räumlich getrennt abgebildet ist. Weiter umfasst der Dampferzeuger 10 eine erste Dampftrommel 14, eine zweite Dampftrommel 16 sowie eine dritte Dampftrommel 18. Beim Betrieb der Dampfturbinenanlage 2 herrscht in der ersten Dampftrommel 14 (Hochdrucktrommel) ein höherer Druck als in der zweiten Dampftrommel 16 (Mitteldrucktrommel), wobei in der zweiten Dampftrommel 16 wiederum größerer Druck herrscht als in der dritten Dampftrommel 18 (Niederdrucktrommel).

Außerdem weist der Dampferzeuger 10 einen Hochdrucküberhitzer 20, einen Mitteldrucküberhitzer 22 und einen Niederdrucküberhitzer 24 auf. Der ersten Dampftrommel 14 ist der Hochdrucküberhitzer 20 zugeordnet. Der zweiten Dampftrommel 16 ist der Mitteldrucküberhitzer 22 zugeordnet und entsprechend ist der dritten Dampftrommel 18 der Niederdrucküberhitzer 24 zugeordnet. Der jeweilige Überhitzer 20, 22, 24 ist mit der ihm zugeordneten Dampftrommel 14, 16, 18 verbunden. Zudem sind die Überhitzer 20, 22, 24 jeweils über eine Frischdampfleitung 26 mit der Dampfturbine 6 verbunden.

Des Weiteren ist die Dampfturbine 6 mit der Kondensatoreinheit 8 verbunden. Die Kondensatoreinheit 8 wiederum ist mit dem Kondensatvorwärmer 12 verbunden. Ferner ist der Kondensatvorwärmer 12 über ein Leitungssystem 27 mit den Dampftrommeln 14, 16, 18 verbunden, wobei dieses Leitungssystem 27 einer besseren Übersichtlichkeit halber in FIG 1 nicht vollständig dargestellt ist.

Zudem weist der Dampferzeuger 10 drei Rückführungen 28 auf, die jeweils einen Flüssigkeitszwischenspeicher 29 und eine Pumpe 30 umfassen. Jede der drei Rückführungen 28 ist mit einem der drei Überhitzer 20, 22, 24 sowie mit der dem jeweiligen Überhitzer 20, 22, 24 zugeordneten Dampftrommel 14, 16, 18 verbunden. Die Rückführungen 28 werden dazu eingesetzt, eine (Prozess-)Flüssigkeit, die beim Betrieb der Dampfturbinenanlage 2 aus der jeweiligen Dampftrommel 14, 16, 18 in den zugehörigen Überhitzer 20, 22, 24 gelangt, wieder in die entsprechende Dampftrommel 14, 16, 18 zurückzuführen.

Darüber hinaus weist die Dampfturbinenanlage 2 eine erste Trenneinrichtung 32 auf, welche als Abscheidebehälter ausgestaltet ist und in welcher eine Flüssigkeit-Dampf-Trennung durchführbar ist. Die erste Trenneinrichtung 32 ist mit der ersten und der zweiten Dampftrommel 14, 16 jeweils über eine Anschlussleitung 34 verbunden. Ferner ist die erste Trenneinrichtung 32 über eine weitere Anschlussleitung 35 mit der dritten Dampftrommel 18 verbunden. Optionalerweise ist die erste Trenneinrichtung 32 an ein Verbindungsrohr 36 angeschlossen, welches die dritte Dampftrommel 18 mit dem Niederdrucküberhitzer 24 verbindet. Einer besseren Übersichtlichkeit halber ist die letztgenannte (optionale) Verbindung figürlich nicht dargestellt.

Außerdem weist die Dampfturbinenanlage 2 eine zweite Trenneinrichtung 38 auf, welche als Abscheidebehälter ausgestaltet ist und in welcher eine Flüssigkeit-Dampf-Trennung durchführbar ist. Die zweite Trenneinrichtung 38 umfasst eine Kühlfalle 40. An die zweite Trenneinrichtung 38, insbesondere an ihre Kühlfalle 40, ist eine Dampfauslassleitung 42 angeschlossen, über welche Dampf aus der zweiten Trenneinrichtung 38 in die Atmosphäre abgeführt werden kann. Zudem ist die zweite Trenneinrichtung 38 über eine Verbindungsleitung 41 mit der dritten Dampftrommel 18 verbunden.

Die erste Trenneinrichtung 32 ist weiterhin über eine Abzweigungsleitung 43, welche von der weiteren Anschlussleitung 35 abzweigt, mit der zweiten Trenneinrichtung 38 verbunden. Ferner ist die erste Trenneinrichtung 32 über eine zusätzliche Verbindungsleitung 44, welche ein Sicherheitsventil 45 aufweist, an die Dampfauslassleitung 42 angeschlossen. Falls ein Druck in der ersten Trenneinrichtung 32 einen vorgegebenen Maximaldruck überschreitet, kann über die zusätzliche Verbindungsleitung 44 Dampf aus der ersten Trenneinrichtung 32 in die Atmosphäre entlassen werden.

Des Weiteren ist die Dampfturbinenanlage 2 mit einer Aufbereitungsanlage 46 zum Aufbereiten eines flüssigen Mediums ausgestattet. Die Aufbereitungsanlage 46 umfasst einen Flüssigkeitskreislauf 48 mit einem Verdunster 50, einem Kondensator 52, einer Förderpumpe 54 und einem Pufferspeicher 56. Darüber hinaus umfasst der Flüssigkeitskreislauf 48 ein erstes 3-Wegeventil 58, das zwischen dem Verdunster 50 und dem Pufferspeicher 56 angeordnet ist. An dieses 3-Wegeventil 58 ist eine Entsorgungsleitung 60 angeschlossen.

Weiter umfasst der Flüssigkeitskreislauf 48 einen ersten Wärmeübertrager 62, einen zweiten Wärmeübertrager 64 sowie einen dritten Wärmeübertrager 66. Alle drei Wärmeübertrager 62, 64, 66 sind als Flüssigkeit-Flüssigkeit-Wärmeübertrager ausgestaltet. Der erste Wärmeübertrager 62 ist eingangsseitig mit der ersten Trenneinrichtung 32 und ausgangsseig mit dem Pufferspeicher 56 verbunden. Der zweite Wärmeübertrager 64 hingegen ist eingangsseitig mit einem Ausgang des Kondensatvorwärmers 12 und ausgangsseitig mit einem Eingang des Kondensatorvorwärmers 12 verbunden. Ferner ist der dritte Wärmeübertrager 66 ein Bestandteil eines geschlossenen Kühlsystems 68.

Zudem sind die zuvor erwähnten Elemente des Flüssigkeitskreislaufs 48 über ein System aus Leitungen miteinander verbunden.

Die Aufbereitungsanlage 46 umfasst außerdem einen Kühlkreislauf 70, in welchem ein gasförmiges Trägermedium zirkulierbar ist. Der zuvor erwähnte Verdunster 50 und der Kondensator 52 sind nicht nur Bestandteile des Flüssigkeitskreislaufs 48, sondern auch Bestandteile des Kühlkreislaufs 70. Zudem umfasst der Kühlkreislauf 70 einen Ventilator 72, der dazu eingerichtet ist, das gasförmige Trägermedium vom Kondensator 52 zum Verdunster 50 und vom Verdunster 50 wieder zurück zum Kondensator 52 zu fördern.

Der Verdunster 50 umfasst einen Behälter 74 sowie eine Sprühvorrichtung 76, die dazu eingerichtet ist, das aufzubereitende Medium im Behälter 74 zu verteilen bzw. zu versprühen. Außerdem weist der Verdunster 50 eine Trägermediumeinlassvorrichtung 78 auf, die dazu eingerichtet ist, das gasförmige Trägermedium in den Behälter 74 einzulassen und dort zu verteilen. Weiterhin weist der Verdunster 50 einen figürlich nicht dargestellten Einlass auf, welcher dazu vorgesehen ist, eine Säure in den Behälter 74 einzuführen.

Darüber hinaus weist die Aufbereitungsanlage 46 eine Entgasungseinrichtung 80, insbesondere einen Membran-Entgaser, auf. Die Entgasungseinrichtung 80 ist eingangsseitig mit dem Kondensator 52 verbunden. Ausgangsseitig die Entgasungseinrichtung 80 über ein zweites 3-Wegeventil 82 mit einem Elektrodeionisationsmodul 84 verbunden, welches seinerseits ausgangsseitig mit einem ersten Flüssigkeitsspeicher 86 verbunden ist. Das zweite 3-Wegeventil 82 ist außerdem mit der Kondensatoreinheit 8 verbunden.

Ferner umfasst die Aufbereitungsanlage 46 einen zweiten Flüssigkeitsspeicher 88, welcher eine zu demineralisierende Flüssigkeit, beispielsweise Trinkwasser, enthält und mit dem Pufferspeicher 56 verbunden ist.

Beim Betrieb der Dampfturbinenanlage 2 wird im Dampferzeuger 10 aus einer Prozessflüssigkeit - im vorliegenden Beispiel aus Prozesswasser - Dampf erzeugt. Der Dampf wird über die Frischdampfleitungen 26 in die Dampfturbine 6 geleitet, die durch den Dampf angetrieben wird.

Weiterhin wird der Dampf aus der Dampfturbine 6 in die Kondensatoreinheit 8 geleitet, in welcher der Dampf auskondensiert. Das dabei entstandene Kondensat wird wieder dem Dampferzeuger 10 zugeführt und der beschriebene Prozess wiederholt sich zyklisch.

Des Weiteren konzentrieren sich beim Betrieb der Dampfturbinenanlage 2 in der Prozessflüssigkeit Verunreinigungen auf, sodass die Dampftrommeln 14, 16, 18 von Zeit zu Zeit abgeschlämmt werden müssen. Zu diesem Zwecke wird die verunreinigte Prozessflüssigkeit, im vorliegenden Fall also Abschlämmwasser, aus der ersten und der zweiten Dampftrommel 14, 16 in die erste Trenneinrichtung 32 eingeleitet. Aus der dritten Dampftrommel 18 wird die verunreinigte Prozessflüssigkeit in die zweite Trenneinrichtung 38 eingeleitet.

In der ersten Trenneinrichtung 32 wird eine Flüssigkeit-Dampf-Trennung durchgeführt. Hierbei wird von der verunreinigten Prozessflüssigkeit Dampf abgetrennt, indem die verunreinigte Prozessflüssigkeit in der ersten Trenneinrichtung 32 entspannt wird. Ein Teil des Dampfs wird aus der ersten Trenneinrichtung 32 über die weitere Anschlussleitung 35 in die dritte Dampftrommel eingeleitet. Optionalerweise wird ein Teil des Dampfs aus der ersten Trenneinrichtung 32 in das Verbindungsrohr 36 eingeleitet, welches den Niederdrucküberhitzer 24 mit der dritten Dampftrommel 18 verbindet. Aus der dritten Dampftrommel 18 bzw. aus dem Verbindungsrohr 36 wird der Dampf weiter in die Dampfturbine 6 geleitet. Auf diese Weise wird aus der verunreinigten Prozessflüssigkeit Dampf zum Antreiben der Dampfturbine 6 (zurück-)gewonnen.

Weiterhin wird bei der Flüssigkeit-Dampf-Trennung eine Flüssigkeit gewonnen. Bei dieser Flüssigkeit handelt es sich um eine bei der Flüssigkeit-Dampf-Trennung zurückbleibende Flüssigkeit, welche aus der verunreinigten Prozessflüssigkeit gewonnen wird. Die Flüssigkeit, die bei der Flüssigkeit-Dampf-Trennung gewonnen wird, wird als Heizmittel in den ersten Wärmeübertrager 62 eingeleitet und durch den Wärmeübertrager 62 geführt. Aus dem ersten Wärmeübertrager 62 wird die Flüssigkeit in den Pufferspeicher 56 eingeleitet, wobei sie einen Teil eines flüssigen, aufzubereitenden Mediums ausbildet.

In der zweiten Trenneinrichtung 38 wird ebenfalls eine Flüssigkeit-Dampf-Trennung durchgeführt. Hierbei wird in analoger Weise eine Flüssigkeit gewonnen. Diese Flüssigkeit wird aus der zweiten Trenneinrichtung 38 direkt in den Pufferspeicher 56 eingeleitet, wobei sie einen anderen Teil des aufzubereitenden Mediums ausbildet. Ein Dampf, der bei der Flüssigkeit-Dampf-Trennung in der zweiten Trenneinrichtung 38 gewonnen wird, wird über die Dampfauslassleitung 42 in die Atmosphäre entlassen.

Ferner herrscht in der zweiten Trenneinrichtung 38 ein niedrigerer Druck als in der ersten Trenneinrichtung 32. So kann in der ersten Trenneinrichtung 32 beispielsweise ein Druck von einigen bar herrschen, während in der zweiten Trenneinrichtung 38 z.B. Atmosphärendruck oder (annähernd) Atmosphärendruck herrschen kann.

Das aufzubereitende Medium wird im Flüssigkeitskreislauf 48 einerseits mithilfe des ersten Wärmeübertragers 62 und andererseits mithilfe des zweiten ersten Wärmeübertragers 64 aufgeheizt, wobei in den zweiten Wärmeübertrager 64 ein Teil der Prozessflüssigkeit, welche den Kondensatvorwärmer 12 durchströmt, als Heizmittel eingeleitet wird. Aus dem zweiten Wärmeübertrager 64 wird die Prozessflüssigkeit wieder zurück in den Kondensatvorwärmer 12 geführt.

Weiter wird das aufzubereitende Medium beim Eintritt in den Verdunster 50 mittels der Sprühvorrichtung 76 im Behälter 76 des Verdunsters 50 verteilt bzw. versprüht. Mithilfe des Ventilators 72 wird Luft als Trägermedium entgegen einer Strömungsrichtung, entlang welcher das aufzubereitende Medium im Verdunster strömt, durch den Verdunster 50 geführt. Ein Teil des verteilten aufzubereitenden Mediums verdunstet im Behälter 76, wird von der Luft aufgenommen und von der Luft in den Kondensator 52 geführt.

Ein anderer Teil des aufzubereitenden Mediums, welcher in flüssiger Form aus dem Verdunster 50 austritt - d.h. derjenige Teil des aufzubereitenden Mediums, der nicht verdunstet und von der Luft mitgeführt wird - wird mittels des dritten Wärmeübertragers 66 gekühlt und danach in den Pufferspeicher 56 eingeleitet.

Des Weiteren ist vorgesehen, dass im Verdunster 50 eine Säure in den Flüssigkeitskreislauf 48 eingebracht wird, sodass eine Bildung von Carbonaten im aufzubereitenden Medium verhindert bzw. reduziert wird.

Mithilfe der Förderpumpe 54 wird der in den Pufferspeicher 56 eingeleitete Teil des aufzubereitenden Mediums aus dem Pufferspeicher 56 zum Kondensator 52 gefördert. Beim Durchströmen des Kondensators 52 kühlt dieser Teil des aufzubereitenden Mediums den verdunsteten, vom Trägermedium aufgenommenen Teil des aufzubereitenden Mediums ab. Dadurch wird im Kondensator 52 aus dem aufzubereitenden Medium ein Kondensat gewonnen.

Das Kondensat wird in die Entgasungseinrichtung 80 geleitet und mithilfe der Entgasungseinrichtung 80 entgast. Ferner kann das Kondensat über das zweite 3-Wegeventil 82 direkt in den Dampfturbinenkreislauf 4, beispielweise in die Kondensatoreinheit 8, eingeleitet werden und als Prozessflüssigkeit für den Dampfturbinenkreislauf 4 eingesetzt werden. Alternativ kann das Kondensat nach seiner Entgasung zunächst mithilfe des Elektrodeionisationsmoduls 84 deionisiert werden, um aus dem Kondensat eine demineralisierte Flüssigkeit (demineralisiertes Wasser) zu gewinnen. Die demineralisierte Flüssigkeit kann im ersten Speicher 86 gespeichert werden und bei Bedarf als Zusatzflüssigkeit (Zusatzwasser) in den Dampfturbinenkreislauf 4 eingeleitet werden.

Eine Restflüssigkeit, die bei bzw. nach der Aufbereitung des Mediums im Flüssigkeitskreislauf 48 zurückbleibt, kann über die Entsorgungsleitung 60 aus dem Flüssigkeitskreislauf 48 abgeführt werden, beispielsweise zu einem Kühlturm oder einer externen Entsorgungseinrichtung.

Das oben beschriebene Verfahren ermöglicht es, ein Abwasser- bzw. Schmutzwasseraufkommen der Dampfturbinenanlage 2 zu reduzieren. Außerdem ermöglicht das oben beschrieben Verfahren einen energieeffizienten Betrieb der Dampfturbinenanlage 2, insbesondere weil thermische Energie, die in der verunreinigten Prozessflüssigkeit enthalten ist, zu einem großen Teil zur Aufbereitung der verunreinigten Prozessflüssigkeit genutzt werden kann.

Weiterhin kann die Aufbereitungsanlage 46 auch auf eine andere Weise, welche nicht an die Abschlämmung der Dampftrommeln 14, 16, 18 gekoppelt zu sein braucht, zur Gewinnung einer demineralisierten Flüssigkeit eingesetzt werden. Die zu demineralisierende Flüssigkeit, die im zweiten Speicher 88 enthalten ist, kann aus dem zweiten Speicher 88 in den Pufferspeicher 56 eingeleitet werden. Anschließend kann die zu demineralisierende Flüssigkeit den Flüssigkeitskreislauf 48 analog zu der oben beschriebenen Art und Weise durchlaufen. Hierbei ist es jedoch nicht erforderlich, dass ein Heizmittel in den ersten Wärmeübertrager 62 eingeleitet wird. Das heißt, der erste Wärmeübertrager 62 kann dazu genutzt werden, die zu demineralisierende Flüssigkeit im Flüssigkeitskreislauf 46 zu führen, ohne sie jedoch aufzuheizen.

Die nachfolgende Beschreibung beschränkt sich im Wesentlichen auf die Unterschiede zu dem vorhergehenden, im Zusammenhang mit FIG 1 beschriebenen Ausführungsbeispiel, auf das bezüglich gleich bleibender Merkmale und Funktionen verwiesen wird. Im Wesentlichen gleiche bzw. einander entsprechende Elemente sind grundsätzlich mit den gleichen Bezugszeichen bezeichnet und nicht erwähnte Merkmale sind im folgenden Ausführungsbeispiel übernommen, ohne dass sie erneut beschrieben sind.

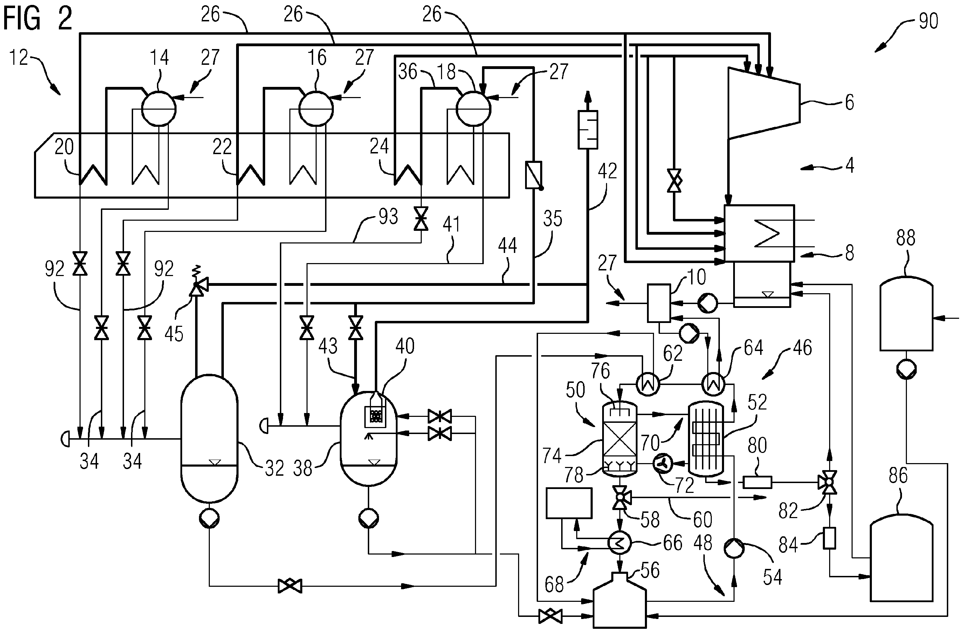

FIG 2 zeigt eine schematische, vereinfachte Darstellung einer weiteren Dampfturbinenanlage 90.

Die weitere Dampfturbinenanlage 90 unterscheidet sich von der Dampfturbinenanlage 2 aus FIG 1 unter anderem dadurch, dass sie keine Rückführungen von den Überhitzern 20, 22, 24 zu den Dampftrommeln 14, 16, 18 aufweist. Stattdessen weist die weitere Dampfturbinenanlage 90 zwei zusätzliche Anschlussleitungen 92 auf, über welche der Hochdrucküberhitzer 20 und der Niederdrucküberhitzer 22 jeweils mit der ersten Trenneinrichtung 32 verbunden sind. Zudem weist die weitere Dampfturbinenanlage 90 eine zusätzliche Anschlussleitung 93 auf, über die der Niederdrucküberhitzer 24 mit der zweiten Trenneinrichtung 38 verbunden ist.

Im vorliegenden Ausführungsbeispiel wird die verunreinigte Prozessflüssigkeit aus den ersten beiden Dampftrommeln 14, 16 sowie aus dem Hochdrucküberhitzer 20 und dem Mitteldrucküberhitzern 22 in die erste Trenneinrichtung 32 eingeleitet. Außerdem wird die verunreinigte Prozessflüssigkeit aus der dritten Dampftrommel 18 sowie aus dem Niederdrucküberhitzer 24 in die zweite Trenneinrichtung 32 eingeleitet.

Wie im vorhergehenden Ausführungsbeispiel setzt sich das flüssige, aufzubereitende Medium auch in diesem Ausführungsbeispiel aus den Flüssigkeiten zusammen, die bei einer Flüssigkeit-Dampf-Trennung in der ersten Trenneinrichtung 32 sowie bei einer Flüssigkeit-Dampf-Trennung in der zweiten Trenneinrichtung 38 gewonnen werden und die in den Flüssigkeitskreislauf 48 eingeleitet werden. Im Flüssigkeitskreislauf 48 wird das aufzubereitende Medium analog zur weiter oben, in Zusammengang mit FIG 1 beschriebenen Art und Weise aufbereitet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren zum Aufbereiten eines flüssigen Mediums, bei dem das aufzubereitende Medium durch einen Flüssigkeitskreislauf (48) geführt wird und das aufzubereitende Medium im Flüssigkeitskreislauf (48) mithilfe eines Wärmeübertragers (62) aufgeheizt wird, wobei in einer Trenneinrichtung (32) eine Flüssigkeit-Dampf-Trennung durchgeführt wird, und eine bei der Flüssigkeit-Dampf-Trennung gewonnene Flüssigkeit als Heizmittel in den Wärmeübertrager (62) eingeleitet wird
**dadurch gekennzeichnet, dass** ein gasförmiges Trägermedium, insbesondere Luft, in einem Kühlkreislauf (70) durch einen Verdunster (50) und einen Kondensator (52) geführt wird, das aufzubereitende Medium im Verdunster (50) mittels einer Sprühvorrichtung (76) verteilt wird, zumindest ein Teil des verteilten aufzubereitenden Mediums verdunstet sowie vom gasförmigen Trägermedium aufgenommen wird und zumindest ein Teil des verdunsteten, vom Trägermedium aufgenommenen aufzubereitenden Mediums im Kondensator (52) kondensiert.

2. Verfahren nach Anspruch 1,
**dadurch gekennzeichnet, dass** eine verunreinigte Flüssigkeit, insbesondere Abschlämmwasser, aus einer Dampftrommel (14, 16), in der ein erster Druck herrscht, in die Trenneinrichtung (32) eingeleitet wird, bei der Flüssigkeit-Dampf-Trennung von der verunreinigten Flüssigkeit Dampf abgetrennt wird und der abgetrennte Dampf aus der Trenneinrichtung (32) in ein Element eines Dampferzeugers (10) eingeleitet wird, wobei in dem Element ein zweiter Druck herrscht, welcher niedriger ist als der erste Druck, und die bei der Flüssigkeit-Dampf-Trennung gewonnene Flüssigkeit aus der verunreinigten Flüssigkeit gewonnen wird.

3. Verfahren nach Anspruch 2,
**dadurch gekennzeichnet, dass** das Element des Dampferzeugers (10), in welches der abgetrennte Dampf aus der Trenneinrichtung (32) eingeleitet wird, eine weitere Dampftrommel (16, 18) oder ein der weiteren Dampftrommel (16, 18) nachgeschaltetes Element des Dampferzeugers (10) ist.

4. Verfahren nach einem der vorhergehenden Ansprüche,
**dadurch gekennzeichnet, dass** die bei der Flüssigkeit-Dampf-Trennung gewonnene Flüssigkeit durch den Wärmeübertrager (62) geführt wird und aus dem Wärmeübertrager (62) in den Flüssigkeitskreislauf (48), insbesondere in einen Pufferspeicher (56), eingeleitet wird, wobei die bei der Flüssigkeit-Dampf-Trennung gewonnene Flüssigkeit zumindest einen Teil des aufzubereitenden Mediums ausbildet.

5. Verfahren nach einem der vorhergehenden Ansprüche,
**dadurch gekennzeichnet, dass** in einem Kondensator (52) ein Kondensat gewonnen wird, welches mithilfe einer Entgasungseinrichtung (80) entgast wird, und das entgaste Kondensat in einen Dampfturbinenkreislauf (4) eingeleitet und/oder mithilfe eines Elektrodeionisationsmoduls (84) deionisiert wird.

6. Verfahren nach einem der vorhergehenden Ansprüche,
**dadurch gekennzeichnet, dass** das aufzubereitende Medium im Flüssigkeitskreislauf (48) mithilfe eines weiteren Wärmeübertragers (64) aufgeheizt wird, wobei zumindest ein Teil einer Prozessflüssigkeit, welche einen Kondensatvorwärmer (12) durchströmt, aus dem Kondensatvorwärmer (12) als Heizmittel in den weiteren Wärmeübertrager (64) geleitet wird.

7. Verfahren nach einem der vorhergehenden Ansprüche,
**dadurch gekennzeichnet, dass** derjenige Teil des aufzubereitenden Mediums, welcher in flüssiger Form aus einem Verdunster (50) austritt, mittels eines zusätzlichen Wärmeübertragers (66) gekühlt wird und in einen Pufferspeicher (56) eingeleitet wird.

8. Aufbereitungsanlage (46) zum Aufbereiten eines flüssigen Mediums, welche einen Flüssigkeitskreislauf (48) mit einem Wärmeübertrager (62) zum Aufheizen des aufzubereitenden Mediums umfasst, wobei eine mit dem Wärmeübertrager (62) verbundene Trenneinrichtung (32), in welcher eine Flüssigkeit-Dampf-Trennung durchführbar ist, wobei eine bei der Flüssigkeit-Dampf-Trennung gewonnene Flüssigkeit als Heizmittel in den Wärmeübertrager (62) einleitbar ist, **dadurch gekennzeichnet, dass** durch einen Kondensator (52), einen Verdunster (50) sowie einen Ventilator ein Kühlkreislauf (70) ausgebildet ist, welcher dazu eingerichtet ist, ein gasförmiges Trägermedium vom Kondensator (52) zum Verdunster (50) und vom Verdunster (50) wieder zurück zum Kondensator (52) zu fördern, und das aufzubereitende Medium im Verdunster (50) mittels einer Sprühvorrichtung (76) verteilbar ist, sodass zumindest ein Teil des verteilten aufzubereitenden Mediums verdunstet sowie vom gasförmigen Trägermedium aufnehmbar ist und zumindest ein Teil des verdunsteten, vom Trägermedium aufgenommenen aufzubereitenden Mediums im Kondensator (52) kondensierbar ist.

9. Aufbereitungsanlage nach Anspruch 8,
**dadurch gekennzeichnet, dass** der Flüssigkeitskreislauf (48) einen zusätzlichen Wärmeübertrager (66) umfasst, welcher dazu eingerichtet ist, eine Flüssigkeit abzukühlen.

10. Aufbereitungsanlage (46) nach einem der Ansprüche 8 oder 9,
**gekennzeichnet durch** eine Entgasungseinrichtung (80) und ein Elektrodeionisationsmodul (84), das mit der Entgasungseinrichtung (80) verbunden ist.

11. Dampfturbinenanlage (2; 90), aufweisend eine Aufbereitungsanlage (46) nach einem der Ansprüche 8 bis 10, einen Dampferzeuger (10) mit einer ersten Dampftrommel (14, 16), in der ein erster Druck herrscht, sowie einer zweiten Dampftrommel (16, 18), in der ein zweiter, niedrigerer Druck herrscht, wobei die Trenneinrichtung (32) mit der ersten Dampftrommel (14, 16) und mit der zweiten Dampftrommel (16, 18) verbunden ist.

12. Dampfturbinenanlage (2; 90) nach Anspruch 11,
**gekennzeichnet durch** einen Kondensatvorwärmer (12), wobei der Flüssigkeitskreislauf (48) einen weiteren Wärmeübertrager (64) zum Aufheizen des aufzubereitenden Mediums umfasst, welcher mit dem Kondensatvorwärmer (12) verbunden ist.

13. Verwendung der Aufbereitungsanlage (46) nach einem der Ansprüche 8 bis 10 zur Gewinnung einer Prozessflüssigkeit für einen Dampfturbinenkreislauf (4) und/oder zur Gewinnung einer demineralisierten Flüssigkeit.

## Claims

1. Method for processing a liquid medium, in which the medium to be processed is conducted through a liquid circuit (48) and the medium to be processed is heated in the liquid circuit (48) with the aid of a heat exchanger (62), wherein a liquid-steam separation is carried out in a separation device (32), and a liquid which is produced during the liquid-steam separation is introduced into the heat exchanger (62) as heating medium, **characterized in that** a gaseous carrier medium, especially air, is conducted through an evaporator (50) and a condenser (52) in a cooling circuit (70), the medium to be processed is dispersed in the evaporator (50) by means of an atomizing device (76), at least some of the dispersed medium to be processed is evaporated and picked up by the gaseous carrier medium, and at least some of the evaporated medium to be processed, which is picked up by the carrier medium, condenses in the condenser (52).

2. Method according to Claim 1,
**characterized in that** a contaminated liquid, especially blowdown water, from a steam drum (14, 16), in which a first pressure prevails, is introduced into the separation device (32), steam is separated from the contaminated liquid during the liquid-steam separation, and the separated steam from the separation device (32) is introduced into an element of a steam generator (10), wherein a second pressure, which is lower than the first pressure, prevails in the element, and the liquid which is produced during the liquid-steam separation is produced from the contaminated liquid.

3. Method according to Claim 2,
**characterized in that** the element of the steam generator (10), into which the separated steam from the separation device (32) is introduced, is an additional steam drum (16, 18) or an element of the steam generator (10) which is connected downstream to the additional steam drum (16, 18).

4. Method according to one of the preceding claims,
**characterized in that** the liquid which is produced during the liquid-steam separation is conducted through the heat exchanger (62) and from the heat exchanger (62) is introduced into the liquid circuit (48), especially into a buffer tank (56), wherein the liquid which is produced during the liquid-steam separation forms at least one part of the medium to be processed.

5. Method according to one of the preceding claims,
**characterized in that** a condensate is produced in a condenser (52), which condensate is degassed with the aid of a degassing device (80), and the degassed condensate is introduced into a steam turbine cycle (4) and/or is deionized with the aid of an electro-deionization module (84).

6. Method according to one of the preceding Claims,
**characterized in that** the medium to be processed is heated in the liquid circuit (48) with the aid of an additional heat exchanger (64), wherein at least some of a process liquid, which flows through a condensate preheater (12), is directed from the condensate preheater (12) into the additional heat exchanger (64) as heating medium.

7. Method according to one of the preceding claims,
**characterized in that** that part of the medium to be processed which discharges from an evaporator (50) in liquid form is cooled by means of an additional heat exchanger (66) and is introduced into a buffer tank (56).

8. Processing plant (46) for processing a liquid medium, which comprises a liquid circuit (48) with a heat exchanger (62) for heating the medium to be processed, wherein a separation device (32), connected to the heat exchanger (62), in which a liquid-steam separation can be carried out, wherein a liquid which is produced during the liquid-steam separation can be introduced into the heat exchanger (62) as heating medium, **characterized in that** a cooling circuit (70) is formed by a condenser (52), an evaporator (50) and a ventilator, which cooling circuit (70) is adapted to feed a gaseous carrier medium from the condenser (52) to the evaporator (50) and from the evaporator (50) back again to the condenser (52), and the medium to be processed can be dispersed in the evaporator (50) by means of an atomizing device (76) so that at least some of the dispersed medium to be processed evaporates and can be picked up by the gaseous carrier medium and at least some of the evaporated medium to be processed, which is picked up by the carrier medium, can be condensed in the condenser (52).

9. Processing plant according to Claim 8,
**characterized in that** the liquid circuit (48) comprises an additional heat exchanger (66) which is adapted to cool a liquid.

10. Processing plant (46) according to either of Claims 8 and 9,
**characterized by** a degassing device (80) and an electro-deionization module (84) which is connected to the degassing device (80).

11. Steam turbine plant (2; 90), having a processing plant (46) according to one of Claims 8 to 10, a steam generator (10) with a first steam drum (14, 16) in which a first pressure prevails, and a second steam drum (16, 18) in which a second, lower pressure prevails, wherein the separation device (32) is connected to the first steam drum (14, 16) and to the second steam drum (16, 18).

12. Steam turbine plant (2; 90) according to Claim 11,
**characterized by** a condensate preheater (12), wherein the liquid circuit (48) comprises an additional heat exchanger (64) for heating the medium to be processed and which is connected to the condensate preheater (12).

13. Use of the processing plant (46) according to one of Claims 8 to 10 for producing a process liquid for a steam turbine cycle (4) and/or for producing a demineralized liquid.

## Revendications

1. Procédé de préparation d'un fluide liquide, dans lequel on fait passer le fluide à préparer dans un circuit de liquide et on chauffe le fluide à préparer dans le circuit (48) de liquide, à l'aide d'un échangeur de chaleur (62), dans lequel, dans un dispositif (32) de séparation, on effectue une séparation liquide-vapeur et on envoie, comme fluide de chauffage, dans l'échangeur de chaleur (62), un liquide obtenu lors de la séparation liquide-vapeur,
**caractérisé en ce que** l'on fait passer un fluide porteur gazeux, notamment de l'air, en un circuit (70) de refroidissement, dans un évaporateur (50) et un condenseur (52), on répartit le fluide à préparer dans l'évaporateur (50), au moyen d'un système (76) de projection, on évapore au moins une partie du fluide à préparer reparti, ainsi qu'on l'absorbe par le fluide porteur gazeux et au moins une partie du fluide à préparer, évaporé et absorbé par le fluide porteur, se condense dans le condenseur (52).

2. Procédé suivant la revendication 1,
**caractérisé en ce que** l'on envoie, dans le dispositif (32) de séparation, un liquide pollué, notamment de l'eau de purge provenant d'un ballon (14, 16) à vapeur, dans lequel règne une première pression, à la séparation liquide-vapeur, on sépare de la vapeur du liquide pollué et on envoie la vapeur séparée du dispositif (32) de séparation à un élément d'un générateur (10 ) de vapeur, dans lequel il règne dans l'élément une deuxième pression, qui est plus basse que la première pression et on obtient le liquide, obtenu à la séparation liquide-vapeur, composé du liquide pollué.

3. Procédé suivant la revendication 2,
**caractérisé en ce que** l'élément du générateur (10 ) de vapeur, dans lequel on envoie la vapeur séparée du dispositif (32) de séparation, est un autre ballon (16, 18) à vapeur ou un élément, en aval de l'autre ballon (16, 18) à vapeur, du générateur (10) de vapeur.

4. Procédé suivant l'une des revendications précédentes,
**caractérisé en ce que** l'on fait passer, dans l'échangeur de chaleur (62), le liquide obtenu à la séparation du liquide-vapeur et on l'envoie de l'échangeur de chaleur (62) dans le circuit (48) de liquide, notamment à un accumulateur (56) tampon, le liquide, obtenu à la séparation du liquide-vapeur, formant au moins une partie du fluide à préparer.

5. Procédé suivant l'une des revendications précédentes,
**caractérisé en ce que** l'on obtient dans le condenseur (52) un produit condensé, qui est dégazé à l'aide d'un dispositif (80) de dégazage et on envoie le produit condensé dégazé dans un circuit (4) de turbine à vapeur et/ou on le déminéralise à l'aide d'un module (84) d'électrodéminéralisation.

6. Procédé suivant l'une des revendications précédentes,
**caractérisé en ce que** l'on chauffe le fluide à préparer dans le circuit (48) liquide, à l'aide d'un autre échangeur de chaleur (64), au moins une partie d'un liquide de processus, qui passe dans un préchauffeur (12) de produit condensé, étant envoyée, comme milieu de chauffage du préchauffeur (12) de produit condensé à l'autre échangeur de chaleur (64).

7. Procédé suivant l'une des revendications précédentes,
**caractérisé en ce que** l'on refroidit, **caractérisé en ce que** l'on refroidit, au moyen d'un échangeur de chaleur (66) supplémentaire, la partie du fluide à préparer, qui sort sous forme liquide d'un évaporateur (50) et on l'envoie dans un accumulateur (56) tampon.

8. Installation (46) de préparation pour préparer un fluide liquide, qui comprend un circuit (48) de liquide ayant un échangeur de chaleur (62) pour chauffer le fluide à préparer, comprenant un dispositif (32) de séparation, qui communique avec l'échangeur de chaleur (62) et dans lequel peut s'effectuer une séparation liquide-vapeur, un liquide obtenu à la séparation du liquide-vapeur pouvant être envoyé comme fluide de chauffage à l'échangeur de chaleur (62), **caractérisé en ce qu'**il est constitué par un condenseur (52), un évaporateur (50), ainsi qu'un ventilateur, un circuit (70) de refroidissement conçu pour véhiculer un fluide porteur gazeux du condenseur (52) à l'évaporateur (50) et de l'évaporateur (50) en retour au condenseur (52) et le fluide à préparer peut être réparti dans l'évaporateur (50) au moyen d'un système (76) de projection, de manière à ce qu'au moins une partie du fluide à préparer réparti soit évaporée, ainsi que puisse être absorbée par le fluide porteur gazeux et au moins une partie du fluide à préparer, évaporée et absorbée par le fluide porteur, puisse être condensée dans le condenseur (52).

9. Installation de préparation suivant la revendication 8,
**caractérisée en ce que** le circuit (48) de liquide comprend un échangeur de chaleur (66) supplémentaire, conçu pour refroidir un liquide.

10. Installation (46) de préparation suivant l'une des revendications 8 ou 9,
**caractérisé par** un dispositif (80) de dégazage et un module (84) d'électrodéminéralisation, qui est relié au dispositif (80) de dégazage.

11. Installation (2, 90) de turbine à vapeur, ayant une installation (46) de préparation suivant l'une des revendications 8 à 10, un générateur de vapeur (10), ayant un premier ballon (14, 16) à vapeur, dans lequel règne une première pression, ainsi qu'un deuxième ballon (16, 18) à vapeur, dans lequel règne une deuxième pression plus basse, le dispositif (32) de séparation communiquant avec le premier ballon (14, 16) à vapeur et avec le deuxième ballon (16, 18) à vapeur.

12. Installation (2, 90) à turbine à vapeur suivant la revendication 11,
**caractérisé par** un préchauffeur (12) de produit condensé, dans laquelle le circuit (48) de liquide comprend, pour chauffer le fluide à préparer, un autre échangeur de chaleur (64), qui communique avec le préchauffeur (12) de produit condensé.

13. Utilisation de l'installation (46) de préparation suivant l'une des revendications 8 à 10, pour obtenir un liquide de processus pour un circuit (4) de turbine à vapeur et/ou pour obtenir un liquide déminéralisé.
